# EUROPÄISCHE PATENTSCHRIFT

(11) **EP 2 566 730 B1**
(45) Veröffentlichungstag und Bekanntmachung des Hinweises auf die Patenterteilung: **16.04.2014**
(21) Anmeldenummer: 11718008.3
(22) Anmeldetag: 28.04.2011
(51) Int. Cl.: B60T 11/20, B60T 11/236

(54) **HAUPTZYLINDER FÜR EINE HYDRAULISCHE KRAFTFAHRZEUGBREMSANLAGE**
MASTER CYLINDER FOR A HYDRAULIC MOTOR VEHICLE BRAKE SYSTEM
MAÎTRE-CYLINDRE DE SYSTÈME DE FREINAGE HYDRAULIQUE DE VÉHICULE AUTOMOBILE

(30) Priorität: 04.05.2010 DE 102010028531
(43) Veröffentlichungstag der Anmeldung: 13.03.2013
(73) Patentinhaber: Continental Teves AG & Co. oHG, 60488 Frankfurt (DE)
(72) Erfinder: POSCH, Volker, 35274 Kirchhain (DE); KÖNIG, Harald, 61239 Ober-Mörlen (DE); JUNGMANN, Udo, 64546 Mörfelden (DE)
(74) Vertreter: Neumann, Stephan
(86) Internationale Anmeldenummer: PCT/EP2011/056727
(87) Internationale Veröffentlichungsnummer: WO 2011/138220

(56) Entgegenhaltungen:
- WO-A1-2005/066005
- DE-T2-602004 008 194
- US-A1- 2003 213 240
- US-A1- 2005 016 174
- US-A1- 2005 115 237

## Beschreibung

Die Erfindung betrifft einen Hauptzylinder für eine hydraulische Kraftfahrzeugbremsanlage, mit wenigstens einem, in einem Gehäuse längs einer Achse infolge Bremsbetätigung verschiebbar angeordnetem Kolben, welchem eine mit Radbremsen verbindbare Druckkammer und eine Nachlaufkammer zugeordnet ist, wobei die Druckkammer im unbetätigten Zustand über eine Ausgleichsbohrung mit einem Druckmittelbehälter verbindbar und bei Bremsbetätigung zwecks Druckaufbau mittels einer auf dem Kolben angeordneten Dichtmanschette davon abtrennbar ist und die Nachlaufkammer über eine Nachlaufbohrung mit dem Druckmittelbehälter verbunden ist, wobei die Dichtmanschette bei Bremsbetätigung die Druckkammer in Richtung Nachlaufkammer abdichtet und beim Lösen der Bremsbetätigung ein Nachsaugen von Druckmittel aus der Nachlaufkammer in Richtung Druckkammer ermöglicht.

Ein derartiger so genannter Schnüffelloch-Hauptzylinder ist beispielsweise aus der DE 19 28 849 A1 bekannt. Die beiden Kolben des Hauptzylinders weisen axiale Ausgleichsbohrungen auf, durch welche beim Lösen der Bremsbetätigung ein Nachsaugen von Druckmittel aus der Nachlaufkammer in Richtung Druckkammer erfolgt. Hierfür wird eine Dichtlippe der Dichtmanschette nach innen gedrückt, so dass das Druckmittel die Dichtlippe überströmen kann. Ferner ist zwischen Kolben und Dichtmanschette eine Füllscheibe angeordnet, welche die Dichtmanschette vor Beschädigungen schützt. Die Füllscheibe klappt mit der Dichtmanschette nach innen und wird ebenfalls beim Lösen der Bremsbetätigung vom Druckmittel überströmt wird.

WO 2005/066005 A1 offenbart einen Hauptzylinder mit einem, in einem Gehäuse verschiebbaren Kolben, der mittels eines, in einer Ringnut des Gehäuses angeordneten Dichtelementes gegenüber einem Druckraum abgedichtet ist, welcher durch im Kolben ausgebildete Querbohrungen mit einem drucklosen Nachlaufraum verbindbar ist. Auf einer Innenseite des Kolbens sind Ausnehmungen vorgesehen, in welche die Querbohrungen münden.

Es herrscht das generelle Bestreben, die Bestandteile von Fahrzeugen einfacher und kostengünstiger auszugestalten. Daher liegt der Erfindung die Aufgabe zugrunde, einen in Hinblick auf die Herstellung einfacheren und kostengünstigeren Hauptzylinder bereitzustellen.

Erfindungsgemäß wird die Aufgabe dadurch gelöst, dass die Dichtmanschette in einer, in radialer Richtung offenen, umlaufenden Nut des Kolbens angeordnet ist, welche durch einen ersten und einen zweiten radial umlaufenden Vorsprung gebildet ist, wobei beim Lösen der Bremsbetätigung das Nachsaugen von Druckmittel aus der Nachlaufkammer in Richtung Druckkammer über den zweiten Vorsprung erfolgt. Hiermit kann die axiale Ausgleichsbohrung des Kolbens entfallen, so dass eine vereinfachte Kolbenkontur ermöglicht wird.

Weitere Merkmale, Vorteile und Anwendungsmöglichkeiten der Erfindung gehen aus den Unteransprüchen und der nachfolgenden Beschreibung eines Ausführungsbeispiels sowie anhand der Zeichnung hervor.

Es zeigt stark schematisiert:
- Figur 1: einen erfindungsgemäßen Hauptzylinder im Längsschnitt;
- Figur 2: einen ersten vergrößerten Ausschnitt des Hauptzylinders gemäß Fig. 1 und
- Figur 3: einen zweiten vergrößerten Ausschnitt des Hauptzylinders gemäß Fig. 1.

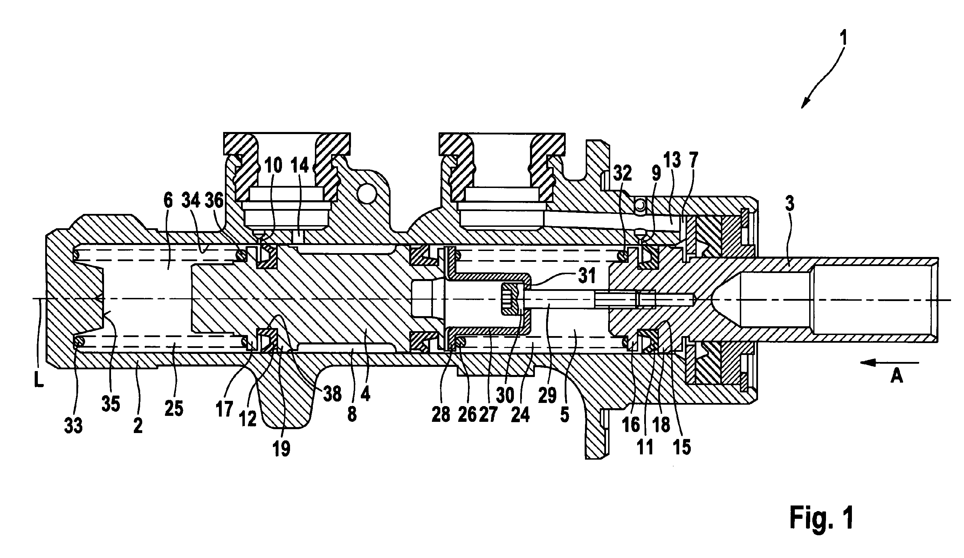

Fig. 1 zeigt im Längsschnitt einen erfindungsgemäßen Hauptzylinder 1 für eine hydraulische Kraftfahrzeugbremsanlage, welcher als Einkreis-Hauptzylinder, oder, wie im Ausführungsbeispiel dargestellt, als Zweikreis- bzw. Tandem-Hauptzylinder ausgebildet sein kann.

Der Hauptzylinder 1 des Ausführungsbeispiels umfasst einen ersten und einen zweiten, in einem Gehäuse 2 längs einer Achse L infolge Bremsbetätigung verschiebbar angeordneten Kolben 3,4, welchen mit Radbremsen verbindbare Druckkammern 5,6 und Nachlaufkammer 7,8 zugeordnet sind.

In einem unbetätigten Zustand des Hauptzylinders 1 sind die Druckkammern 5,6 jeweils über eine Ausgleichsbohrung 9,10, dem so genannten Schnüffelloch, mit einem nicht dargestellten Druckmittelbehälter verbindbar. Bei Betätigung des Hauptzylinders 1 in Betätigungsrichtung A sind die Druckkammern 5,6 mittels auf den Kolben 3,4 angeordneten Dichtmanschetten 11,12 von dem Druckmittelbehälter abtrennbar. Die Nachlaufkammern 7,8 sind über im Gehäuse 2 ausgebildete Nachlaufbohrungen 13,14 mit dem Druckmittelbehälter verbunden.

Wie Fig. 1 zu entnehmen ist, sind die Dichtmanschetten 11,12 jeweils in einer, in radialer Richtung offenen umlaufenden Nut 15,38 des Kolbens 3,4 angeordnet, welche durch einen ersten und einen zweiten radial umlaufenden Vorsprung 16,17,18,19 gebildet ist.

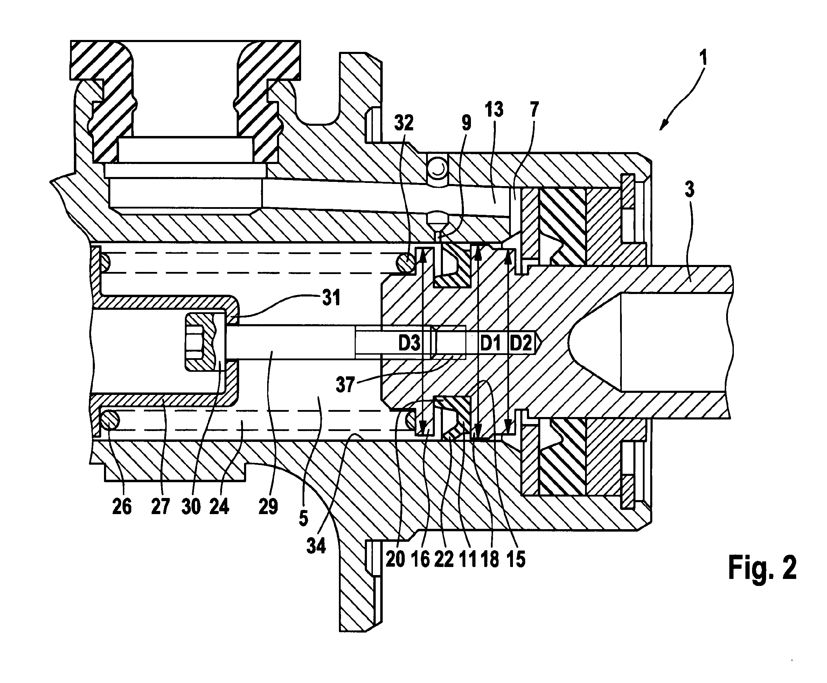

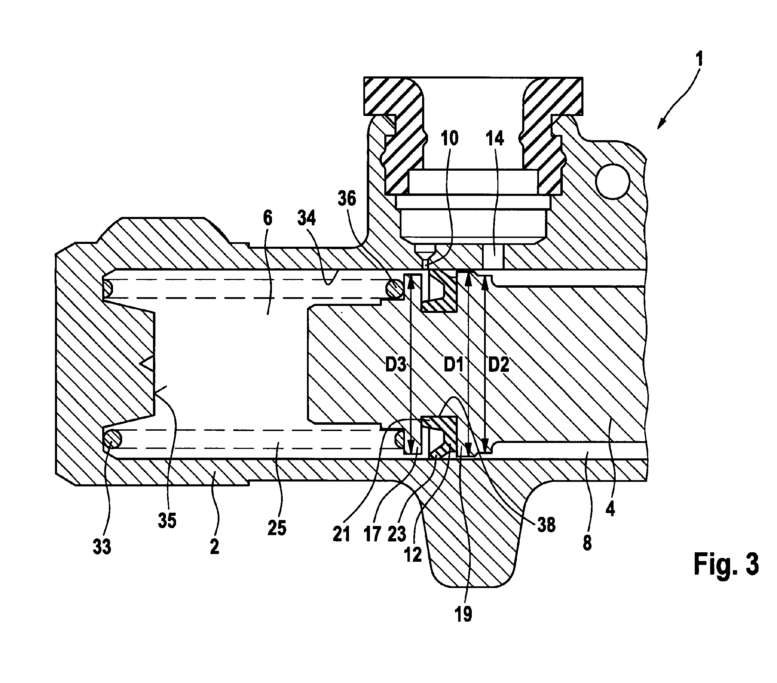

Fig. 2 und 3 zeigen einen ersten und einen zweiten vergrößerten Ausschnitt des Hauptzylinders 1. Es ist erkennbar, dass die Dichtmanschetten 11,12 jeweils eine statisch beaufschlagte Innendichtlippe 20,21 und eine dynamisch beaufschlagte Außendichtlippe 22,23 aufweisen, wobei die Außendichtlippe 22,23 an einer Bohrung 34 des Gehäuses 2 dichtend anliegen.

Jedem Kolben 3,4 ist eine Rückstellfeder 24,25 zugeordnet. Die Rückstellfeder 24 des ersten Kolbens 3 stützt sich mit einem ersten Ende 26 an einem radial nach außen gerichteten Vorsprung 28 einer Hülse 27 ab, welche von einem Schraubenelement 29 durchdrungen wird. Das Schraubenelement 29 ist selbstsichernd in eine Gewindebohrung 37 des ersten Kolbens 3 eingeschraubt, so dass die Hülse 27 bei einer Kompression der Rückstellfeder 24 relativ zu dem Schraubenelement 29 teleskopierbar ist. Ein zweites Ende 32 der Rückstellfeder 24 liegt ferner an dem ersten Vorsprung 16 des ersten Kolbens 3 an, wodurch eine bei bekannten Hauptzylindern übliche Federabstützhülse entfallen kann.

Durch die Anlage eines Schraubenkopfes 30 des Schraubenelementes an einem radial nach innen gerichteten Vorsprung 31 der Hülse 27 ist die maximale Ausdehnung der Rückstellfeder 24 festgelegt und die Rückstellfeder 24 bildet mit dem ersten Kolben 3 eine gefesselte Einheit.

Die Rückstellfeder 25 des zweiten Kolbens 4 stützt sich mit einem ersten Ende 33 an einem Boden 35 der Bohrung 34 und mit einem zweiten Ende 36 an dem ersten Vorsprung 17 des zweiten Kolbens 4 ab. Auch hier kann durch die direkte Abstützung der Rückstellfeder 25 an dem Kolbenvorsprung auf eine separate Federabstützhülse verzichtet werden.

Zur Bremsbetätigung des Hauptzylinders 1 wird der erste Kolben 3 in Betätigungsrichtung A verschoben. Dabei wird die Bewegung des ersten Kolbens 3 über die Rückstellfeder 24 und die Hülse 27 auf den zweiten Kolben 4 übertragen. Sobald sich die Außendichtlippen 22,23 der Dichtmanschetten 11,12 im Bereich der Ausgleichsbohrungen 9,10 befinden, also die steuernde Bohrungs-Seitenkante überfahren ist, ist der sogenannte Leerweg des Hauptzylinders 1 durchfahren, da kein Druckmittel mehr von dem Druckmittelbehälter über die Ausgleichsbohrungen 9,10 in die Druckkammern 5,6 gelangen kann. Die Verbindung der Druckkammern 5,6 mit dem Druckmittelbehälter ist unterbrochen. Da auch die Außendichtlippen 22,23 die Druckkammern 5,6 in Richtung Nachlaufkammern 7,8 abdichten, kann in den Druckkammern 5,6 Druck aufgebaut werden.

Beim Lösen der Bremsbetätigung werden die Kolben 3,4 durch die Rückstellfedern 24,25 entgegen der Betätigungsrichtung A zurückgedrängt. Dabei kann beispielsweise bei einem schnellen Lösen der Bremsbetätigung in den Druckkammern 5,6 ein Unterdruck entstehen, so dass Druckmittel über den zweiten Vorsprung 18,19 aus den Nachlaufkammern 7,8 in Richtung der Druckkammern 5,6 nachgesaugt wird. Die Außendichtlippe 22,23 wird durch den Unterdruck nach innen gedrückt, wodurch das Überströmen des zweiten Vorsprungs 18,19 ermöglicht wird.

Wie den Fig. 2 und 3 zu entnehmen ist, ist der zweiten Vorsprung 18,19 gestuft vorgesehen und weist einen ersten Durchmesser D1 und einen zweiten Durchmesser D2 auf, welcher kleiner als D1 vorgesehen ist.
Der Durchmesser D1 ist derart bemessen, dass das Überströmen von Druckmittel möglich und gleichzeitig eine Führung des Kolbens 3,4 in der Bohrung 34 gewährleistet ist. Hiermit können axiale Ausgleichsbohrungen der Kolben 3,4 entfallen, so dass die Kolben 3,4 mit einer vereinfachten Kolbenkontur und kostengünstiger herstellbar sind.

Die gestufte Ausbildung des zweiten Vorsprungs 19 hat den weiteren Vorteil, dass der zweite Kolben 4 im Unterschied zu einem Kolben mit axialen Ausgleichsbohrungen verkürzt ausgebildet werden kann. Diese Verkürzung des Kolbens 4 ist möglich, da der zweite Vorsprung 19 mit seinem kleineren Durchmesser D2 in der gezeigten unbetätigten Stellung des Hauptzylinders 1 im Bereich der Nachlaufbohrung 14 angeordnet werden kann, ohne dass das Nachsaugen des Druckmittels über die Nachlaufbohrung 14 beeinträchtigt wird. Durch die Verkürzung des zweiten Kolbens 4 ist auch ein kürzeres Gehäuse 2 für den Hauptzylinder 1 einsetzbar. Hierdurch können eine Materialeinsparung erzielt und das Packaging verbessert werden.

Im Bereich des ersten Vorsprungs 16,17 weist der Kolben 3,4 jeweils ein Durchmesser D3 auf, welcher derart bemessen ist, dass die Rückstellfeder 24,25 daran anliegen kann und dass das Überströmen von Druckmittel in Richtung Druckkammer 5,6 nicht beeinträchtigt wird.

### Bezugszeichenliste

- 1: Hauptzylinder
- 2: Gehäuse
- 3: Kolben
- 4: Kolben
- 5: Druckkammer
- 6: Druckkammer
- 7: Nachlaufkammer
- 8: Nachlaufkammer
- 9: Ausgleichsbohrung
- 10: Ausgleichsbohrung
- 11: Dichtmanschette
- 12: Dichtmanschette
- 13: Nachlaufbohrung
- 14: Nachlaufbohrung
- 15: Nut
- 16: Vorsprung
- 17: Vorsprung
- 18: Vorsprung
- 19: Vorsprung
- 20: Innendichtlippe
- 21: Innendichtlippe
- 22: Außendichtlippe
- 23: Außendichtlippe
- 24: Rückstellfeder
- 25: Rückstellfeder
- 26: Ende
- 27: Hülse
- 28: Vorsprung
- 29: Schraubenelement
- 30: Schraubenkopf
- 31: Vorsprung
- 32: Ende
- 33: Ende
- 34: Bohrung
- 35: Boden
- 36: Ende
- 37: Gewindebohrung
- 38: Nut

- A: Betätigungsrichtung
- L: Achse
- D1: Durchmesser
- D2: Durchmesser
- D3: Durchmesser

## Patentansprüche

1. Hauptzylinder (1) für eine hydraulische Kraftfahrzeugbremsanlage, mit wenigstens einem, in einem Gehäuse (2) längs einer Achse (L) infolge Bremsbetätigung verschiebbar angeordnetem Kolben (3,4), welchem eine mit Radbremsen verbindbare Druckkammer (5,6) und eine Nachlaufkammer (7,8) zugeordnet ist, wobei die Druckkammer (5,6) im unbetätigten Zustand über eine Ausgleichsbohrung (9,10) mit einem Druckmittelbehälter verbindbar und bei Bremsbetätigung zwecks Druckaufbau mittels einer auf dem Kolben (3,4) angeordneten Dichtmanschette (11,12) davon abtrennbar ist und die Nachlaufkammer (7,8) über eine Nachlaufbohrung (13,14) mit dem Druckmittelbehälter verbunden ist, wobei die Dichtmanschette (11,12) bei Bremsbetätigung die Druckkammer (5,6) in Richtung Nachlaufkammer (7,8) abdichtet und beim Lösen der Bremsbetätigung ein Nachsaugen von Druckmittel aus der Nachlaufkammer (7,8) in Richtung Druckkammer (5,6) ermöglicht, **dadurch gekennzeichnet, dass** die Dichtmanschette (11,12) in einer, in radialer Richtung offenen, umlaufenden Nut (15,38) des Kolbens (3,4) angeordnet ist, welche durch einen ersten und einen zweiten radial umlaufenden Vorsprung (16,17,18,19) gebildet ist, wobei beim Lösen der Bremsbetätigung das Nachsaugen von Druckmittel aus der Nachlaufkammer (7,8) in Richtung Druckkammer (5,6) über den zweiten Vorsprung (18,19) erfolgt.

2. Hauptzylinder (1) nach Anspruch 1, **dadurch gekennzeichnet, dass** der erste Vorsprung (16,17) zur Anlage einer in der Druckkammer (5,6) angeordneten Rückstellfeder (24,25) für den Kolben (3,4) vorgesehen ist.

3. Hauptzylinder (1) nach Anspruch 1 oder 2, **dadurch gekennzeichnet, dass** der zweite Vorsprung (18,19) gestuft vorgesehen ist.

4. Hauptzylinder (1) nach Anspruch 3, **dadurch gekennzeichnet, dass** der zweite Vorsprung (18,19) einen ersten Durchmesser (D1) und einen zweiten Durchmesser (D2) aufweist, wobei der zweite Durchmesser (D2) kleiner als der erste Durchmesser (D1) vorgesehen ist.

5. Hauptzylinder (1) nach Anspruch 4, **dadurch gekennzeichnet, dass** der zweite Vorsprung (18,19) mit seinem zweiten Durchmesser (D2) in unbetätigter Stellung des Hauptzylinders (1) im Bereich der Nachlaufbohrung (13,14) angeordnet ist.

## Claims

1. Master cylinder (1) for a motor vehicle hydraulic brake system, having at least one piston (3, 4), which is arranged in a housing (2) so that it is displaceable along an axis (L) as a result of a brake actuation and to which a pressure chamber (5, 6), which can be connected to wheel brakes, and a refill chamber (7, 8) are assigned, wherein the pressure chamber (5, 6) in the non-actuated state can be connected to a fluid reservoir via a compensating bore (9, 10) and on actuation of the brake can be isolated therefrom by means of a cup seal (11, 12) arranged on the piston (3, 4) in order to build up pressure, and the refill chamber (7, 8) is connected to the fluid reservoir via a refill bore (13, 14), wherein the cup seal (11, 12), on actuation of the brake, seals off the pressure chamber (5, 6) in the direction of the refill chamber (7, 8) and when the brake actuation is released allows additional fluid to be drawn from the refill chamber (7, 8) in the direction of the pressure chamber (5, 6), **characterized in that** the cup seal (11, 12) is arranged in a radially open, encircling groove (15, 38) of the piston (3, 4), which groove is formed by a first and a second radially encircling projection (16, 17, 18, 19), wherein when the brake actuation is released additional fluid is drawn from the refill chamber (7, 8) in the direction of the pressure chamber (5, 6) via the second projection (18, 19).

2. Master cylinder (1) according to Claim 1, **characterized in that** the first projection (16, 17) is intended to bear against a return spring (24, 25) for the piston (3, 4) arranged in the pressure chamber (5, 6).

3. Master cylinder (1) according to Claim 1 or 2, **characterized in that** the second projection (18, 19) is stepped.

4. Master cylinder (1) according to Claim 3, **characterized in that** the second projection (18, 19) has a first diameter (D1) and a second diameter (D2), the second diameter (D2) being smaller than the first diameter (D1).

5. Master cylinder (1) according to Claim 4, **characterized in that** in the non-actuated position of the master cylinder (1) the second projection (18, 19) is arranged with its second diameter (D2) in the area of the refill bore (13, 14).

## Revendications

1. Maître-cylindre (1) d'un système de freinage hydraulique d'un véhicule automobile, comprenant au moins un piston (3, 4) disposé dans un boîtier (2) de manière déplaçable le long d'un axe (L) suite à l'actionnement d'un frein, auquel sont associées une chambre de pression (5, 6) pouvant être connectée à des freins de roue et une chambre de remplissage (7, 8), la chambre de pression (5, 6), dans l'état non actionné, pouvant être connectée à un récipient de fluide sous pression par le biais d'un alésage de compensation (9, 10) et, lors de l'actionnement du frein, pouvant être séparée de celui-ci dans le but d'augmenter la pression au moyen d'une garniture d'étanchéité (11, 12) disposée sur le piston (3, 4) et la chambre de remplissage (7, 8) étant connectée au récipient de fluide sous pression par le biais d'un alésage de remplissage (13, 14), la garniture d'étanchéité (11, 12), lors de l'actionnement du frein, étanchéifiant la chambre de pression (5, 6) dans la direction de la chambre de remplissage (7, 8) et, lors du relâchement de l'actionnement du frein, permettant une réaspiration de fluide sous pression hors de la chambre de remplissage (7, 8) dans la direction de la chambre de pression (5, 6), **caractérisé en ce que** la garniture d'étanchéité (11, 12) est disposée dans une rainure périphérique (15, 38) du piston (3, 4), ouverte dans la direction radiale, laquelle est formée par une première et une deuxième saillie radialement périphérique (16, 17, 18, 19), la réaspiration de fluide sous pression hors de la chambre de remplissage (7, 8) dans la direction de la chambre de pression (5, 6) se produisant lors du relâchement de l'actionnement du frein par le biais de la deuxième saillie (18, 19).

2. Maître-cylindre (1) selon la revendication 1, **caractérisé en ce que** la première saillie (16, 17) est prévue pour l'application d'un ressort de rappel (24, 25) pour le piston (3, 4), disposé dans la chambre de pression (5, 6).

3. Maître-cylindre (1) selon la revendication 1 ou 2, **caractérisé en ce que** la deuxième saillie (18, 19) est prévue sous forme étagée.

4. Maître-cylindre (1) selon la revendication 3, **caractérisé en ce que** la deuxième saillie (18, 19) présente un premier diamètre (D1) et un deuxième diamètre (D2), le deuxième diamètre (D2) étant inférieur au premier diamètre (D1).

5. Maître-cylindre (1) selon la revendication 4, **caractérisé en ce que** la deuxième saillie (18, 19) est disposée avec son deuxième diamètre (D2) dans la position non actionnée du maître-cylindre (1) dans la région de l'alésage de remplissage (13, 14).
